# EUROPEAN PATENT APPLICATION

(11) **EP 2 433 698 A1**
(43) Date of publication of application: **28.03.2012**
(21) Application number: 10850417.6
(22) Date of filing: 19.07.2010
(51) Int. Cl.: B01D 47/00, F24F 6/00

(54) **WET AIR CLEANER**

(30) Priority: 11.05.2010 KR 20100043722
(71) Applicant: Jeung, Young Min, Jung-gu, Daejeon 301-757 (KR)
(72) Inventor: Jeung, Young Min, Jung-gu, Daejeon 301-757 (KR)
(74) Representative: Ablett, Graham Keith
(86) International application number: PCT/KR2010/004710
(87) International publication number: WO 2011/142501

(57) **Abstract**

The present invention relates to a wet-type air purifying apparatus, more specifically, a wet-type air purifying apparatus that is installed in a passage(for example, ventilating openings or ventilating windows) through which the air passes and purifies polluting matter in the air by adsorbing the polluting matter contained in the air together with the water to a water filter, which is formed in a water frame to purify the polluting matter in the air by use of adsorbing ability of water and to which the water is injected, while the air passes through the water filter.

## Description

The present invention relates to a wet-type air purifying apparatus, more specifically, a wet-type air purifying apparatus that is installed in a passage(for example, ventilating openings or ventilating windows) through which the air passes and purifies polluting matter in the air by adsorbing the polluting matter contained in the air together with the water to a water filter, which is formed in a water frame to purify the polluting matter in the air by use of adsorbing ability of water and to which the water is injected, while the air passes through the water filter.

### BACKGROUND ART

In general, the method of purifying air is largely divided into dry type and wet type, and the dry type is in turn divided into filter type and electric dust collection type.

First, an air purifying apparatus of filter type removes dust or polluting matter in the room through the filter and then discharges the purified air. Such air purifying apparatus of filter type has a high effect of trapping the polluting matter by the filter, and thus exhibits an excellent ability of purifying the air. However, if the filter is used over a long period, dust particles are increased in the filter, and the increased dust particles reduce the cross section of the filter through which the air pass, whereby the volume of the air passing through the filter is reduced. Accordingly, the air purifying apparatus using the filter is reduced in its capacity of air purification and efficiency of dust collection. In addition, if the filter is not cleaned and replaced periodically, germs are propagated due to the polluting matter trapped in the filter, and there is a possibility of the propagated germs being discharged.

Furthermore, air purifying apparatus of electric dust collection type removes the polluting matter in the air by generally using corona discharge. When such electric dust collection type is used, dusts are accumulated on a surface of a dust collecting pole while a lot of air rapidly pass within the air cleaner. However, if a specific resistance of the dust is low below 10⁴ Ω-cm, re-entrainment phenomenon occurs that the dusts do not stick to the surface of the dust collection pole, falling therefrom, and thus an efficiency of dust collection is reduced. In addition, if the specific resistance of the dust is high above 10¹² Ω-cm, back corona phenomenon occurs that the existing dusts collected on the surface of the dust collection polar fall again, and thus overall efficiency of dust collection is reduced. Furthermore, there is a problem that high concentration of ozone is generated during operation of a discharging plate.

So, wet-type air purifying methods have been proposed in which maintenance is easy and ability of air purification can be enhanced; among the wet-type air purifying methods, a typical one is a water filter method that purifies the air using water.

In such a water filter method, the polluted air is purified by sucking in the air containing the dusts and germs etc. and then contacting it with the water; this method can effectively and environment-friendly remove the polluting matter because it utilizes adsorption characteristic of water.

As an example of such a wet-type air purifying apparatus, an art disclosed in Korean Laid-Open Patent Publication No. 10-2005-0101512 is developed. As shown in Figs. 1 and 2, according to its technical construction, the apparatus of the art is comprised of a body (1) with a suction grill (2) formed at its front face and a discharging grill (3) formed at its rear face; a fan (5) that is arranged in the central part of said body (1) and sucks in external air into the body (1) while being rotated according to driving of a motor (4); a water reservoir (7) that is arranged in a lower part of the body (1) to contain water; a pump (8) that is arranged at one side of the water reservoir (7) to pump the water in the water reservoir (7); a filter (9) that is arranged inside a filter housing (10) connected to the other side of said pump (8) and filters foreign matter while the water is pumped; and a nozzle (12) that is connected to the other end of said filter housing (10) via a connecting pipe (11) to spray the pumped water to upper part of the body (1).

However, the art disclosed in the Korean Laid-Open Patent Publication No. 10-2005-0101512 has an effect that the polluted air can be environment-friendly removed by use of adsorption characteristic of water, but since the water is injected in a spray manner, the injected water may be scattered by air flow generated by said fan (5).

Thus, there are problems that the water is discharged to the outside, not collected in the water reservoir (7) formed in the lower part, accordingly an efficiency of air purification is reduced, and since scattered water drops are sprinkled around, the water is collected on a surrounding floor, which result in a moist atmosphere, and surrounding electronic devices may fail due to the scattered water drops.

### DISCLOSURE OF THE INVENTION

### PROBLEM TO BE SOLVED BY THE INVENTION

The present invention has been devised to solve the above-mentioned problems, and its object is to provide a wet-type air purifying apparatus where the water is not injected in a spray manner, and a water filter is wound on a water frame formed within a body, so the water flows along said water filter into a water reservoir below the filter, and thus the air can be purified while the polluting matter in the air is adsorbed to the water.

Furthermore, another object of the present invention is to provide a wet-type air purifying apparatus where the water is injected in the front, center and rear of the water filter wound on the water frame, and thus the polluting matter contained in the air can be completely removed in three steps while the air passes through the water filter.

Furthermore, yet another object of the present invention is to provide a wet-type air purifying apparatus where the polluting matter in the air introduced into the body is sterilized and thereafter the air passes through the water filter, so the air can be more cleanly purified.

Furthermore, yet another object of the present invention is to provide a wet-type air purifying apparatus where the thickness of the apparatus can be slimmed by mounting a blower fan above the water frame to suck in the external air form the side and then discharge the air to upper side of the water frame.

Yet another object of the present invention is to provide a wet-type air purifying apparatus where since area of contact between the water and air is made wide by the water filter, amount of evaporation of the water is increased, and thus humidity of the room can be effectively maintained.

### MEANS FOR SOLVING THE PROBLEM

The constructions of the present invention for achieving the above-mentioned objects are described with reference to the drawings as follows.

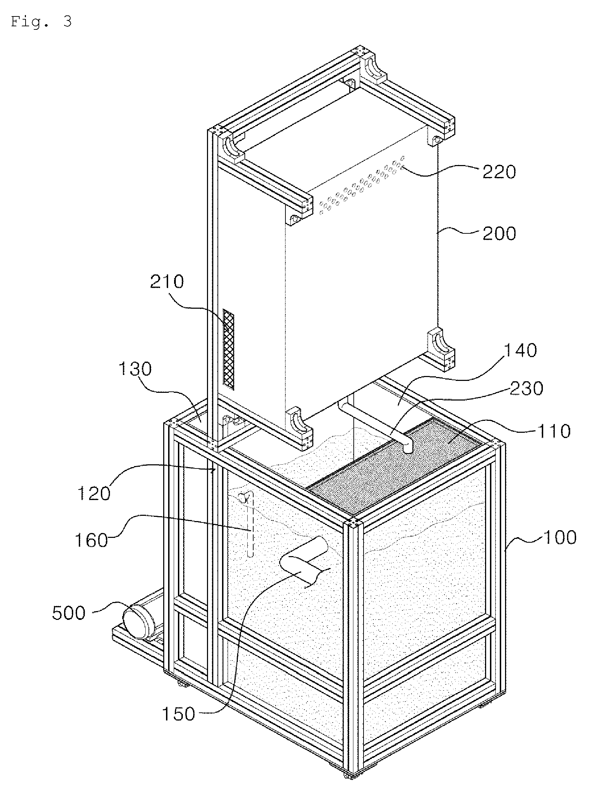

As shown in Fig. 3, the present invention provides a wet-type air purifying apparatus **characterized in that** it comprises a water reservoir (100) for containing water; a water filter (400) with strings(cords, fine lines (threads) etc.)(410) vertically wound on a water frame (300) so as to purify the air within a body (200) arranged above said water reservoir (100); water-supplying pipes (600) connected to the water reservoir (100) so as to inject the water introduced from the water reservoir by a circulating pump (500) to said water filter (400) through a plurality of injection nozzles (610); and a blower fan (700) mounted above the water frame (300) in order to suck in external air through inlet ports (210) formed on both sides of the body (200) and then discharge the air through the water filter (400), to which the water is injected, to an outlet port (210) formed above the body (200), wherein the water, which has purified the air through said water filter (400), is recovered to the water reservoir (100) through a water-discharging port (230) arranged beneath the body (200).

Furthermore, the present invention provides a wet-type air purifying apparatus **characterized in that** it further comprises a sterilizing lamp (800) for sterilizing the polluting matter in the air introduced through the inlet ports (210) of said body (200).

Furthermore, the present invention provides a wet-type air purifying apparatus **characterized in that** it further comprises a blocking film filter (900) for preventing the water from being scattered by the air that has passed through said water filter (400).

Furthermore, the present invention provides a wet-type air purifying apparatus **characterized in that** it further comprises a water-purifying filter (110) arranged in a water-containing room (140) of said water reservoir (100) to purify the water recovered along said water filter (400).

### EFFECTS OF THE PRESENT INVENTION

According to the present invention constructed as above, the water is not injected in a spray manner, and the polluting matter mixed in the air is purified while the water flows along the water filter with strings wound on the water frame, and the blocking film filter prevents the water from being scattered by the air that has passed through the water filter, and at the same time the air introduced into the body through the inlet ports thereof is sterilized by light irradiated from the sterilizing lamp, and thus an effect can be obtained that cleanly purified air can be discharged.

Furthermore, since area of contact between the water and air is made wide by the water filter, amount of evaporation of the water is increased, and thus humidity of the room can be effectively maintained.

Furthermore, the present invention has an advantage that the thickness of the apparatus can be slimmed by mounting a blower fan above the water frame, and therefore the structure of the apparatus is simplified and also transportation and installation thereof is easy.

### BRIEF DESCRIPTION OF THE DRAWING

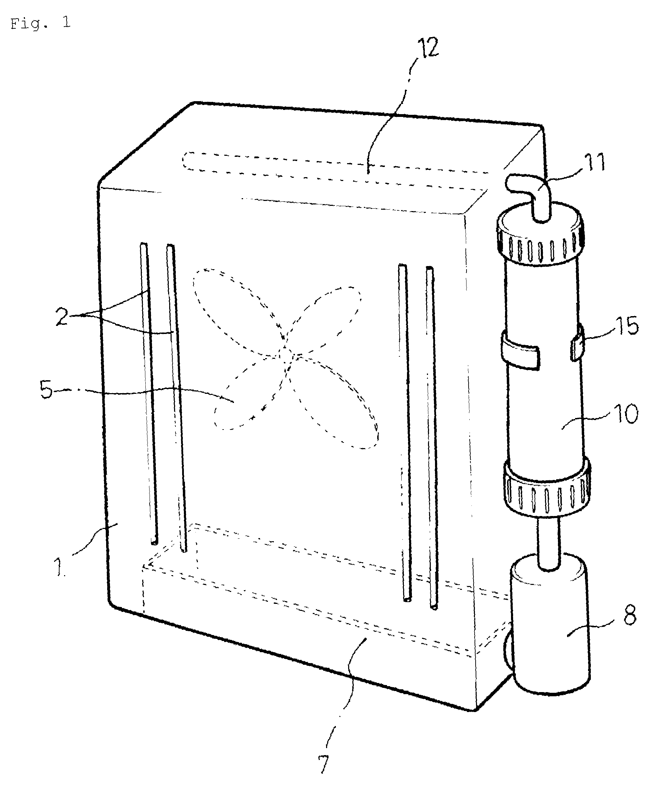

Fig. 1 is a perspective view of a conventional wet-type air purifying apparatus.

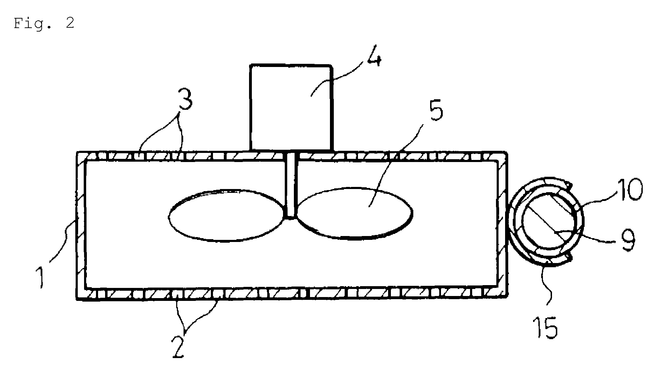

Fig. 2 is a sectional view of Fig. 1.

Fig. 3 is a perspective front view of a wet-type air purifying apparatus according to the present invention.

Fig. 4 is a perspective rear view of the wet-type air purifying apparatus according to the present invention.

Fig. 5 is a sectional view of the wet-type air purifying apparatus according to the present invention.

Fig. 6 is a perspective view showing a water filter of the present invention in detail.

### BEST MODES FOR CARRYING OUT THE INVENTION

The present invention relates to the wet-type air purifying apparatus that is used to purify the air in greenhouses for cultivating the crops or cattle shed for breeding the cattle etc. and underground water is used for water used for purification of the air, accordingly an economic benefit can be obtained.

Furthermore, the wet-type air purifying apparatus of the present invention can be installed at any place that can allow for purification of the air in the room as well as said greenhouse or cattle shed.

### MODES FOR CARRYING OUT THE INVENTION

Hereinafter, a preferred example of the present invention will be described in detail with reference to the attached drawings.

The same components in the drawings are designated by the same reference numerals, and the description thereof will be omitted. Furthermore, the present invention may be embodied as a plurality of different forms, and is not limited to an example described hereinafter.

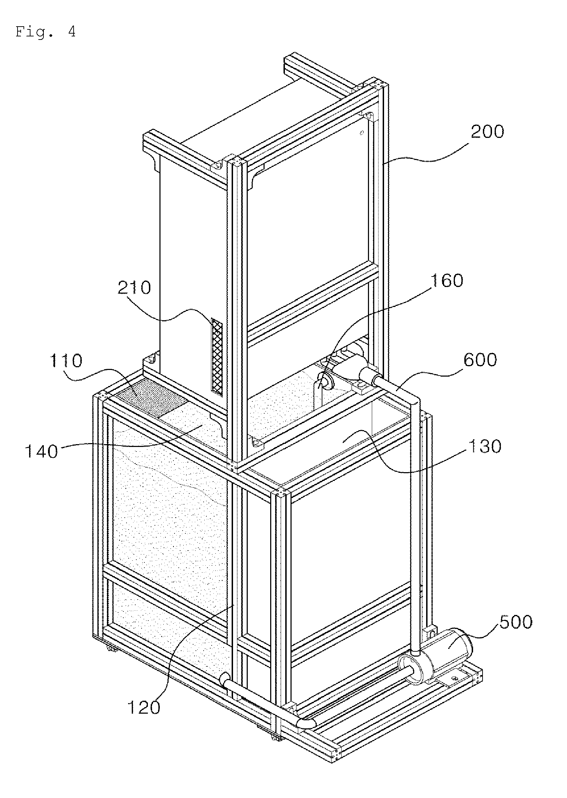

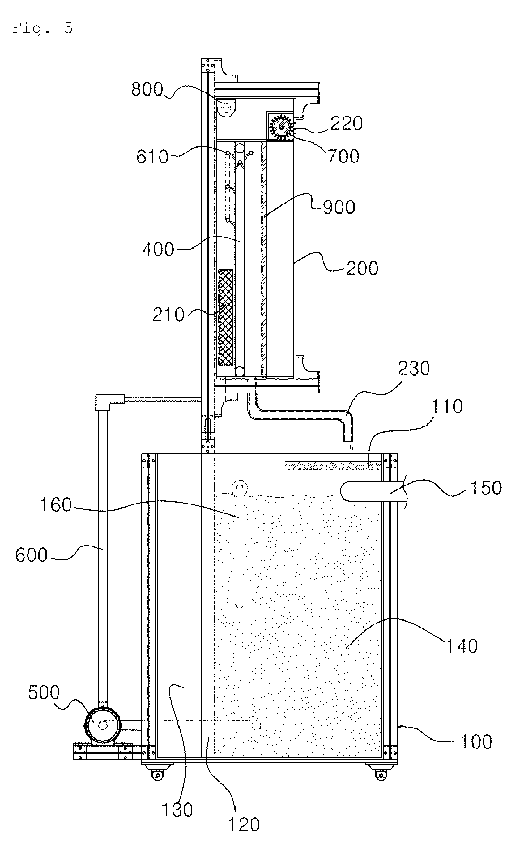

As shown in Figs. 3 to 5, the present invention comprises a water reservoir (100) for containing water and a body (200) inside which a water frame (200) is arranged with water filter (400) wound thereon to purify the air.

Said water reservoir (100) is divided by a partition (120), and thus formed on one side thereof is a pipe-accommodating room (130) for accommodating pipe lines in order to prevent outside arrangement of the various pipe lines from spoiling the appearance of the apparatus, and formed on the other side is a water-containing room (140) for containing the water.

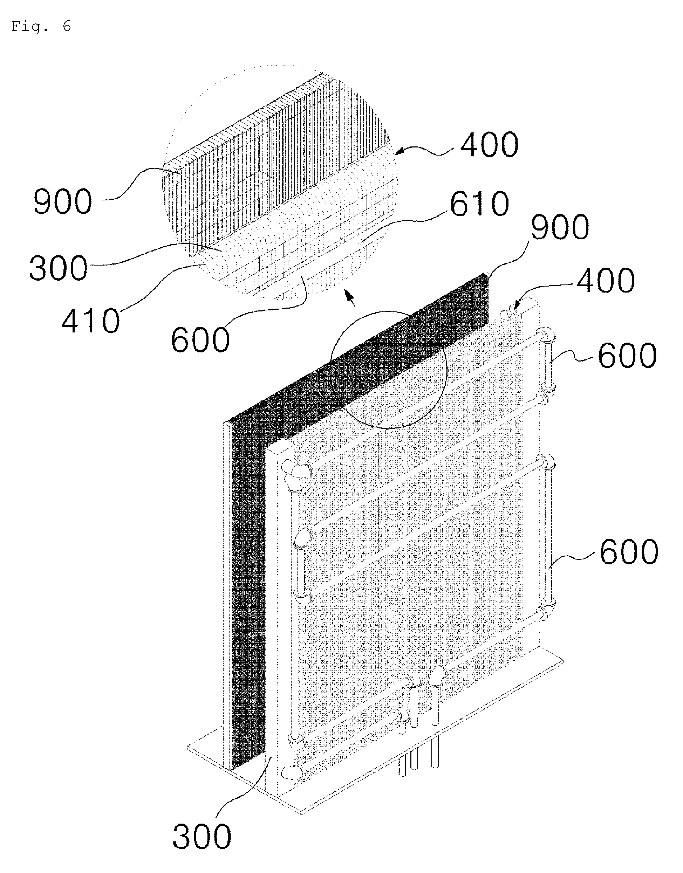

The body (200) for purifying air is arranged on said water reservoir (100), and arranged in the body (200) is the water frame (300) with the water filter (400) wound thereon for adsorbing the polluting matter in the air by use of injected water. Furthermore, as shown in Fig. 6, strings (410) are one that is formed from fine cords or threads etc. made of fibers or synthetic resin and can absorb the water, and the water filter (400) consists of the water frame (300) with the strings (410) wound thereon.

In addition, water-supplying pipes (600) for injecting the water to said water filter (400) are closed at its one end, have a plurality of injection nozzles (610) formed near said end, and are connected to the water-containing room (140) of the water reservoir (100) and also to a circulating pump (500) for introducing the water into the water-supplying pipes (600).

At this to time, the water-supplying pipes (600) are installed in the front, central and rear of the water filter (400), respectively, and the water injected from these water-supplying pipes adsorbs the polluting matter mixed in the air passing through the water filter (400) and then flows downward along the water filter (400).

Furthermore, a blocking film filter (900) is formed in the rear of the water frame (300) such that the water cannot be scattered by the air that has passed through the water filter (400).

In addition, arranged above the water frame (300) is a blower fan (700) for introducing the air through inlet ports (210) formed on both sides of the body (200) and then discharging the air purified while passing through the water filter (400) and the blocking film filter (900) to an outlet port (220) formed at upper end portion of rear face of the body (200).

In addition, a water-discharging port (230) is formed beneath the body (200) such that the water flowing along the water filter (400) within the body (200) may be recovered to the water-containing room (140) of the water reservoir (100), and formed in this water-containing room (140) of the water reservoir (100) is a water-purifying filter (110) for purifying the polluting matter adsorbed to the water.

Furthermore, arranged above the inlet ports (210) and in the front of the water frame (300) is a sterilizing lamp (800) for primarily sterilizing the polluting matter contained in the air introduced into the body (200).

Hereinafter, an example of operating the air purifying apparatus of the present invention will be described with reference to the drawings.

The present invention relates to a wet-type air purifying apparatus that is installed in ventilating openings or ventilating windows to purify the polluting matter contained in the air by use of adsorbing ability of water when the external air enters the room or air in the room is discharged to the outside. As shown in Figs. 3 to 6, if the power is turned on in order to purify the air, the circulating pump (500), blower fan (700) and sterilizing lamp (800) are operated simultaneously.

By the operation of the blower fan (700) the external air is introduced through the inlet ports (210) arranged on both sides of the body (200) to pass through the water filter (400) formed within the body (200).

At this time, since by the operation of the circulating pump (500) the water contained in the water reservoir is injected to the water filter (400) through the injection nozzles (610) of the water-supplying pipes (600) arranged in the front, center and rear of the water filter (400), the water adsorbs the polluting matter mixed in the air which has passed through the inlet ports (210), while contacting with the air, and then flows downward along the strings (410) of the water filter (400) to be recovered to the water-containing room (140) of the water reservoir (100) via the water-discharging port (230) formed at the bottom of the body (200).

Since the water recovered to the water-containing room (140) of said water reservoir (100) is mixed with the polluting matter, the water discharged through the water-discharging port (230) passes through a water-purifying filter (110) into the water-containing room (140) of the water reservoir (100) such that the water may be cleanly purified and then supplied again to the water filter (400).

In addition, before the air introduced into the inlet ports (210) of the body (200) by the blower fan (700) passes through the water filter (400), the air is irradiated by turned-on sterilizing lamp (800) arranged above the inlet ports (210) and in the front of the water filter (400), whereby the polluting matter contained in the air is sterilized.

The air cleanly purified while passing through the water filter (400) as described above then passes through the blocking film filter (900). Namely, the blocking film filter (900) prevents the water from being scattered by the air which has passed the water filter (400).

Then, the air, which has passed through the blocking film filter (900), is discharged via the blower fan (700) through the outlet port (220) formed at upper portion of the rear face of the body (200).

As described above, the water contained in the the water-containing room (140) of the water reservoir (100) is injected to the water filter (400) through the injection nozzles (610) of the water-supplying pipes (600) arranged in the front, center and rear of the water filter (400) and then recycled to the water-containing room (140), and the recycled water flows along the water filter (400), and the polluting matter mixed in the air is purified by use of the adsorbing ability of the water flowing along the water filter (400).

Therefore, in the present invention, the water is not sprayed in the air; the water flows downward along the water filter (400), and at the same time contacts with the air by forming the blocking film filter (900) immediately in the rear of the water filter (400), so the water can be prevented from being scattered around the water filter (400), and thus an efficiency of purification is enhanced.

At this time, by winding the strings (410) forming said water filter (400) with intervals of the strings being dense and close, thin water films are formed between said water filters (400) due to surface tension of the water; said water film may be ruptured even by weak air flow, but immediately recover its original shape again.

Said water films thus formed are ruptured and then recover its original shape repeatedly according to the air flow, thereby adsorbing and purifying the polluting matter in the air passing through the water filter (400).

Furthermore, in the present invention, since the water cleanly purified by the water-purifying filter (110) is used so as to obtain a humidifying effect resulting from an evaporation phenomenon of the water flowing over said water filter (400), more clean air can be maintained.

Furthermore, the water reduced due to the evaporation phenomenon can be supplemented by an supplementing water-injecting port (150) formed in the water-containing room (140) of said water reservoir (100).

Meanwhile, a water level sensor (160) is further provided in the water-containing room (140) of said water reservoir (100), and thus the amount of the water contained in the water-containing room (140) can be adjusted by means of a signal detected in the water level sensor (160).

As described above, the preferred example of the present invention has been described, but the scope of the claims of the present invention is not limited to the preferred example, and matters substantially equal to the example of the present invention also fall within the scope of the claims of the present invention, and the persons having ordinary skills in the art may carry out the present invention by various modification thereof without departing from spirit of the present invention.

### INDUSTRIAL APPLICABILITY

The present invention relates to a wet-type air purifying apparatus, more specifically, a wet-type air purifying apparatus that is installed in ventilating openings or ventilating windows and equipped with the polluting matter-adsorbing water filter to purify the polluting matter in the air by use of adsorbing ability of water, and makes the water flow along said water filter, and by means of the blocking film filter prevents the water that has passed through the water filter from being scattered.

## Claims

1. A wet-type air purifying apparatus, comprising:
a water reservoir (100) for containing water;
a water filter (400) with strings(cords, fine lines(threads) etc.)(410) vertically wound on a water frame (300) so as to purify the air within a body (200) arranged above said water reservoir (100);
water-supplying pipes (600) connected to the water reservoir (100) so as to inject the water introduced from the water reservoir by a circulating pump (500) to said water filter (400) through a plurality of injection nozzles (610); and
a blower fan (700) mounted above the water frame (300) in order to suck in external air through inlet ports (210) formed on both sides of the body (200) and then discharge the air through the water filter (400), to which the water is injected, to an outlet port (220) formed above the body (200), the water, which has purified the air through said water filter (400), being recovered to the water reservoir (100) via a water-discharging port (230) arranged beneath the body (200).

2. The wet-type air purifying apparatus according to claim 1, further comprising a sterilizing lamp (800) for sterilizing the polluting matter in the air introduced through the inlet ports (210) of said body (200).

3. The wet-type air purifying apparatus according to claim 1, further comprising a blocking film filter (900) for preventing the water from being scattered by the air that has passed through said water filter (400).

4. The present invention provides a wet-type air purifying apparatus **characterized in that** it further comprises a water-purifying filter (110) arranged in a water-containing room (140) of said water reservoir (100) to purify the water recovered along said water filter (400).

5. The wet-type air purifying apparatus according to claim 1 or 4, further comprising a water level sensor (160) arranged in said water-containing room (140).
